# EUROPÄISCHE PATENTSCHRIFT

(11) **EP 3 247 599 B1**
(45) Veröffentlichungstag und Bekanntmachung des Hinweises auf die Patenterteilung: **11.08.2021**
(21) Anmeldenummer: 16701021.4
(22) Anmeldetag: 20.01.2016
(51) Int. Cl.: B60T 10/02, B60T 1/087

(54) **BREMSVORRICHTUNG MIT RETARDER UND VERFAHREN ZUR REGELUNG EINES SOLCHEN**
BRAKE DEVICE WITH RETARDER, AND METHOD FOR REGULATING SUCH A BRAKE DEVICE
SYSTÈME DE FREINAGE MUNI D'UN RALENTISSEUR ET PROCÉDÉ DE RÉGULATION DUDIT RALENTISSEUR

(30) Priorität: 20.01.2015 DE 102015200754
(43) Veröffentlichungstag der Anmeldung: 29.11.2017
(73) Patentinhaber: Voith Patent GmbH, 89522 Heidenheim (DE)
(72) Erfinder: WASSERMANN, Mirco, 74544 Michelbach an der Bilz (DE); BISCHOFF, Markus, 74405 Gaildorf (DE)
(74) Vertreter: Voith Patent GmbH - Patentabteilung
(86) Internationale Anmeldenummer: PCT/EP2016/051044
(87) Internationale Veröffentlichungsnummer: WO 2016/116466

(56) Entgegenhaltungen:
- WO-A1-2005/080165
- WO-A1-2011/002400
- CN-A- 102 947 146
- CN-A- 102 947 146
- DE-A1-102010 010 222
- DE-A1-102011 010 555

## Beschreibung

Die vorliegende Erfindung betrifft eine Bremsvorrichtung mit einem hydrodynamischen Retarder, wie er als Dauerbremse in Kraftfahrzeugen, beispielsweise Bussen, Lastkraftwagen oder Schienenfahrzeugen eingesetzt wird, sowie ein Verfahren zur Regelung eines solchen bzw. zum Einstellen eines Bremsmomentes einer mit einem solchen Retarder ausgestatteten Bremsvorrichtung.

Die Arbeitsweise und die Grundfunktion eines hydrodynamischen Retarders ist dem Fachmann allgemein bekannt, z.B. aus der DE 39 43 708 A1. Weiterhin sind dem Fachmann unterschiedliche Verfahren bekannt, wie das Bremsmoment eines solchen Retarders geregelt werden kann.

Aus der DE 102010010222 A1 ist Retarder bekannt, der im Arbeitsraum einen Temperatursensor aufweist, welcher auf der dem Arbeitsraum zugewandten Seite wenigstens einer Ventileinrichtung zur Steuerung des zu- und/oder abströmenden Arbeitsmediums angeordnet ist Die Überwachung der Temperatur kann dabei zur Funktionsüberwachung und Steuerung des Retarders im genutzt werden.

In der Regel ist der Retarder mit dem Antriebsstrang des Kraftfahrzeuges gekoppelt, so dass zumindest der Rotor des Retarders ständig angetrieben wird. Durch die Regelung der Befüllung des Arbeitsraums, der durch einen Rotor und einen Stator gebildet wird, mit einem Arbeitsmedium, kann das Bremsmoment des Retarders geregelt werden. Als Arbeitsmedium wird in der Regel Öl oder Wasser beziehungsweise ein Wassergemisch verwendet.

Weiterhin sind abschaltbare Retarder bekannt bei denen der Rotor im Nicht-Bremsbetrieb von Antriebsstrang des Kraftfahrzeuges entkoppelt wird, um im Nicht-Bremsbetrieb die Verlustleistung zu minimieren.

Im Bremsbetrieb ist der Arbeitsraum zumindest teilweise befüllt und es bildet sich im Arbeitsraum eine Kreislaufströmung aus, über die ein Drehmoment, als Bremsmoment des Retarders bezeichnet, vom Stator auf den Rotor übertragbar ist. Dabei wird der Rotor bzw. das Primärschaufelrad und insbesondere die mit dem Primärschaufelrad drehfest ausgeführte Welle verzögert.

Die dabei entstehende Wärme muss abgeführt werden, was dadurch geschieht, dass zumindest ein Teil des Arbeitsmediums in einem Kreislauf zirkuliert, der mit einem Kühlkreislauf verbunden bzw. in diesen eingebunden ist, über den die überschüssige Wärme abgeführt werden kann.

Im Nichtbremsbetrieb wird der Arbeitsraum des Retarders im Wesentlichen oder vollständig entleert, sodass kein oder kein wesentliches Drehmoment vom Stator auf den Rotor übertragen wird. Entsprechend wird auch keine Bremswirkung erzielt. Um die Leerlaufverluste möglichst weit zu reduzieren, kann vorgesehen werden, den Retarder mit einem axial verschiebbaren Rotor oder Stator auszuführen, um im Nicht-Bremsbetrieb den Trennspalt von Rotor und Stator vergrößern zu können.

Im Bremsbetrieb ist in der Regel immer eine Regelung des Bremsmomentes vorgesehen die von unterschiedlichen Bedingungen abhängig ist. Unter anderem ist das Bremsmoment auch von der Temperatur des Arbeitsmediums bzw. des Kühlmediums abhängig, da die bei der Bremsung erzeugte Wärmeenergie über das Arbeitsmedium bzw. das Kühlmedium abgeführt werden muss. Ist eine der Temperaturen zu hoch muss die Bremsleistung zurückgenommen werden.

Zur Temperaturüberwachung kann die Temperatur von verschiedenen Orten im Arbeitsmediumkreislauf und/oder Kühlkreislauf herangezogen werden. So kann beispielsweise die Arbeitsmediumtemperatur im Auslasskanal des Retarders und/oder die Kühlwassertemperatur gemessen werden.

Trotz aller bisherigen Temperaturregelausführungen kann es in bestimmten Betriebssituationen dazu kommen, dass die gemessene Temperatur so hoch ist, dass der Retarder abgeregelt wird, also die Bremsleistung zurückgenommen wird, obwohl das Kühlsystem in der Lage wäre, die überschüssige Wärmeenergie abzuführen.

Im Extremfall führt dies zu Bremsmomentsprüngen oder während des Nicht-Bremsbetriebes zu einer zu hohen Temperatur im Arbeitsraum.

Eine der Aufgaben der Erfindung ist es nun, ein Verfahren zur Regelung einer Bremsvorrichtung mit Retarder vorzuschlagen, mit dem ein verbessertes Bremsverhalten und eine verbesserte Bremsleistungsverfügbarkeit erreicht werden kann.

Diese Aufgabe wird durch ein Verfahren zur Regelung einer Bremsvorrichtung mit Retarder, entsprechend den in Anspruch 1 genannten Merkmalen gelöst.

Ein Verfahren zur Regelung einer Bremsvorrichtung mit einem hydrodynamischen Retarder wird vorgeschlagen, wobei zur Regelung des hydrodynamischen Retarders zumindest im Bremsbetrieb zeitweise eine Regeltemperatur T_{Kreislauf} verwendet wird, die von einem Temperatursensor stammt, der derart positioniert ist, dass mit dessen Hilfe eine Temperatur T_{Kreislauf} im Arbeitsraum des Retarders gemessen werden kann.

Übersteigt die Temperatur T_{Kreislauf} des Arbeitsmediums im Arbeitsraum einen festgelegten Maximalwert, muss die Bremsleistung mittels der Regelung reduziert werden. Unterhalb des Maximalwertes kann mit maximaler Bremsleistung gebremst werden.

Der hydrodynamische Retarder umfasst mindestens je ein Rotor- und Statorschaufelrad, die in einem gemeinsamen Gehäuse angeordnet sind und miteinander einen torusförmigen Arbeitsraum bilden. Der Arbeitsraum ist für den Bremsbetrieb des Retarders mit einem Arbeitsmedium befüllbar und für den Nicht-Bremsbetrieb des Retarders wieder entleerbar. Weiterhin ist eine vom Arbeitsraum zu einem Kühler und von dort wieder zurück führender äußere Kühlkreislaufleitung, bzw. Kühlkreislauf, vorgesehen.

Durch die Messung der Temperatur T_{Kreislauf} im Arbeitsraum kann zum einen die Bremsleistung zeitnah an die Temperaturentwicklung im Arbeitsmedium während der Bremsung angepasst werden. Zum Anderem kann auch im Nicht-Bremsbetrieb die Temperatur im Arbeitsraum gemessen bzw. geregelt werden und zur Kühlung kann bei Bedarf Arbeitsmedium in den Arbeitsraum eingeleitet werden, um eine unerlaubt hohe Temperatur zu vermeiden.

Der Temperatursensor kann an jeder Position im Arbeitsraum positioniert sein, so kann der Sensor beispielsweise auch in den Arbeitsraum hineinreichen.

Im Sinne der Erfindung muss der Temperatursensor so positioniert sein, dass die Arbeitsmediumtemperatur innerhalb des tourusförmigen Arbeitsraums, der von Rotorschaufelrad und Statorschaufelrad gebildet wird, messbar ist.

In einer bevorzugten Ausführung ist der Temperatursensor am Stator oder an einer Schaufel des Stators positioniert.

Durch die Positionierung des Temperatursensors im Arbeitsraum ist weiterhin ein vorteilhaftes Verfahren zur Regelung einer Bremsvorrichtung mit Retarder möglich, bei dem zumindest im Bremsbetrieb zeitweise die Temperatur T_{Kreislauf} als Regeltemperatur zur Regelung des Bremsmomentes verwendet wird, die von dem Temperatursensor stammt, der derart positioniert ist, dass mit dessen Hilfe eine Temperatur im Arbeitsraum gemessen wird.

Weiterhin kann vorgesehen werden, dass zur Regelung des Bremsmomentes des Retarders beim Einschalten des Bremsbetriebes für eine Zeitspanne t _{totzeit} eine Ausgangstemperatur als Regeltemperatur verwendet wird, die von der vom Temperatursensor gemessenen Temperatur T_{Kreislauf} abweicht. Durch diesen zusätzlichen Regelungsschritt wird erreicht, dass auch bei einer relativ hohen gemessenen Temperatur T_{Kreislauf} im Arbeitsraum, während des Nicht-Bremsbetriebes, der Bremsbetrieb mit einer maximalen Anfangsbremsleistung begonnen werden kann.

Insbesondere kann die verwendeten Regeltemperatur zur Regelung des Bremsmomentes des Retarders während der Zeitspanne t _{totzeit} eine Temperatur T_{Rückre-gelung} ist, wobei diese gleich einem konstanten Ausgangstemperaturwert T_{angenom-men} sein kann, der niedrige ist als die Temperatur T_{Kreislauf}.

In einem weiteren Regelschritt kann vorgesehen werden, dass nach Ablauf der Zeitspanne t _{totzeit} die Temperatur T_{Rückregelung}, mittels linearer Interpolation, in einer Z_{eitspanne tüberblendenEinschalten} zurück auf die gemessene Temperatur T_{Kreislauf} überblendet wird, bzw. erhöht wird.

Dadurch wir vermieden, dass es zu einem sprunghaften Anstieg der Regeltemperatur kommt, wenn von der Temperatur T_{Rückregelung} auf die Temperatur T_{Kreislauf} umgeschaltet wird. Ein sprunghafter Temperaturanstieg hätte eine unerwünschte sprunghafte Bremsmomentreduzierung zur Folge.

Nach dem Überblenden von der Temperatur T_{Rückregelung} auf T_{Kreislauf} oder sobald die Temperaturen T_{Rückregelung} und T_{Kreislauf} gleich sind, kann die Bremsmomentregelung des Retarders auf Grundlage von T_{Kreislauf} erfolgen.

Weiterhin kann beim Abschalten des Retarders die für die Bremsmomentregelung verwendete Regeltemperatur von der gemessenen Temperatur T_{Kreislauf} erneut auf die angenommene Temperatur T_{Rückregelung} umgeschaltet werden, die dann innerhalb einer Zeitspanne t _{überblendenAusschalten} von der gemessenen Temperatur T_{Kreislauf} zurück auf die Temperatur Tangenommen überblendet wird, bzw. reduziert wird.

Zusätzlich kann bei der Regelung des Retarders vorgesehen sein, dass bei einer erneuten Bremsung innerhalb der Zeitspanne t _{überblendenAusschalten} beim Start der erneuten Bremsung, die zu dem Startzeitpunkt der Bremsung aktuelle angenommene Temperatur T_{Rückregelung}, so lange zu Regelung des Bremsmomentes herangezogen wird, bis die Temperatur T_{Rückregelung} gleich mit der Temperatur T_{Kreislauf} ist. Durch diesen Regelschritt wird erreicht, dass auch bei zwei kurz aufeinander folgenden Bremsungen, der sogenannten Wiederholbremsung, keine Überhitzung das Kühlsystems eintritt, da direkt mit einer verminderten Bremsleistung, aber maximal möglichen Bremsleistung, gestartet wird.

Weiterhin kann die Regelung derart erfolgen, dass während des Bremsbetriebs von der Temperatur T_{Rückregelung} auf die gemessene Temperatur T_{Kreislauf} umgeschaltet wird, sobald die Temperatur T_{Kreislauf} gleich oder niedriger als Temperatur T_{Rückregelung} ist. So kann eine schnellere Erhöhung des Bremsmomentes erfolgen.

Alternativ oder Anstelle von der Temperatur T_{angenommen} kann auch die aktuelle Kühlwassertemperatur im Kühlkreislauf als Ausgangstemperaturwert für den Temperaturregelwert verwendet werden. Insbesondere dann, wenn die Kühlwassertemperatur über den CAN-Bus des Fahrzeugs zur Verfügung gestellt werden. Ist die Kühlwassertemperatur verfügbar, kann auch vorgesehen werden, dass der Retarder abgeschaltet wird, sobald die aktuelle Kühlwassertemperatur im Kühlkreislauf einen Grenzwert übersteigt.

Weitere Merkmale der erfindungsgemäßen Bremsvorrichtung mit Retarder sowie dem Verfahren zur Regelung eines solchen und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: eine schematische Darstellung einer Bremsanlage mit Retarder
- Figur 2: eine Bremsverlaufsdiagramm mit den dazugehörigen Temperaturverläufen beim Überblenden der gemessenen Temperatur
- Figur 3: eine Bremsverlaufsdiagramm mit den dazugehörigen Temperaturverläufen bei Wiederholbremsung
- Figur 4: eine Bremsverlaufsdiagramm mit den dazugehörigen Temperaturverläufen beim Einschalten mit frühem Überblenden der gemessenen Temperatur

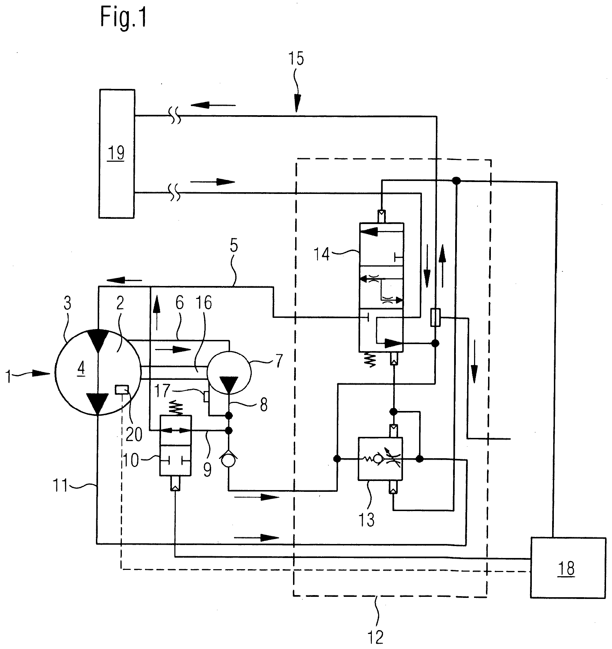

Figur 1 zeigt beispielhaft eine schematische Darstellung einer Bremsanlage mit Retarder 1. In der Darstellung ist der Retarder 1 bzw. die hydrodynamische Maschine zusammen mit einem externen Arbeitsmediumkreislauf 15 gezeigt. Der externe Arbeitsmediumkreislauf 15 kann als Motorkühlkreislauf ausgeführt sein, dabei weist dieser weiterhin einen nicht dargestellten Druckausgleichsbehälter sowie eine Wasserpumpe (oder allgemein Kühlmediumpumpe) auf. Mittels des externen Arbeitsmediumkreislaufes 15 wird ein Motor, insbesondere Verbrennungsmotor, der das Kraftfahrzeug antreibt, gekühlt. Alternativ könnte die hydrodynamische Maschine auch in einem externen Arbeitsmediumkreislauf einer stationären Anlage vorgesehen sein. Zum Abführen der Wärme ist entsprechend der Kühler 19 vorgesehen, wobei der Anteil des Kühlmediums, insbesondere Wasser oder ein Wassergemisch, das mittels der Wasserpumpe, nicht dargestellt, durch den Kühler 19 gepumpt wird, unter anderem über die Stellung eines nicht dargestellten Thermostatventils bestimmt wird.

Der Retarder 1 ist somit im externen Arbeitsmediumkreislauf 15 eingebunden, und wird mit dem Kühlmedium als Arbeitsmedium betrieben und gekühlt. Entsprechend wird das Kühlmedium beziehungsweise Arbeitsmedium über den Arbeitsmediumeinlass 5 in den Retarder geleitet und über den Arbeitsmediumauslass 11 wieder aus dem Retarder abgeführt.

Die Bremsleistung des Retarders wird über ein Regelventil 12 geregelt. Wobei der Arbeitsmediumeinlass 5 an das Einlassventil 14 und der Arbeitsmediumauslass 11 mit dem Druckregelventil 13 verbunden ist, wobei das Einlassventil 14 den Strömungsweg für Arbeitsmedium im Arbeitsmediumeinlass 5 wahlweise versperrt oder freigibt. Das Einlassventil 14 und das Druckregelventil 13 können zu einem gemeinsamen Ventil 12 zusammengefasst werden. Die Ansteuerung erfolgt über ein Druckluftsystem, insbesondere das Fahrzeugdruckluftsystem.

Zur vollständigen Entleerung des Retarderarbeitsraums 4 sind eine Absaugpumpe 7 und ein Ventil 10 vorgesehen. So kann die Restmenge an Arbeitsmedium, die nach dem Abschalten des Retarders im Arbeitsraum 4 verbleibt, über die Druckleitung 8 direkt in den Kühlkreislauf 15 oder über das Ventil 10 und dem verbindenden Kanal 9 in den Arbeitsmediumeinlass 4 gepumpt werden.

Zur Temperaturüberwachung der Temperatur des Arbeitsmediums im Arbeitsraum 4 ist ein Temperatursensor 20 vorgesehen. Überschreitet die Temperatur im Arbeitsraum 4 einen Grenzwert kann über die Regelung 18 eine entsprechende Maßnahme eingeleitet werden. Im Bremsbetrieb kann die Füllung des Arbeitsraums 4 mit Arbeitsmedium reduziert werden, wodurch allerdings auch die Bremsleistung reduziert wird. Im Nicht-Bremsbetrieb kann Arbeitsmedium über die Ventile 10 und/oder 14 in den Arbeitsraum 4 geleitet werden bzw. so lange im Kreislauf geführt werden, bis die Temperatur im Arbeitsraum 4 zurückgegangen ist.

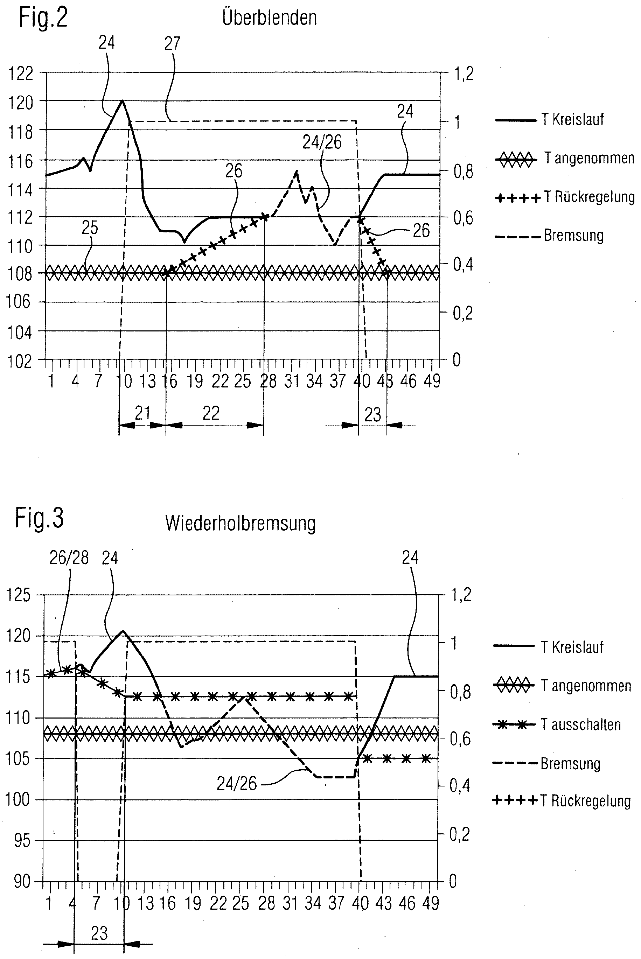

In den Figuren 2 bis 4 sind Diagramme mit unterschiedlichen Bremsverläufen und mit den dazugehörigen zeitlichen Temperaturverläufen dargestellt. Dabei ist die von dem Temperatursensor 20 im Arbeitsraum 4 gemessene Temperatur als T_{Kreislauf} benannt. Weiterhin ist ein Temperaturverlauf einer angenommen Temperatur T_{angenommen}, der Temperaturverlauf einer Temperatur T_{Rückregelung} und der Temperaturverlauf einer Temperatur T_{ausschait} dargestellt.

Die für die Regelung des Retarders 1 verwendete Regeltemperatur könnte zu jedem Zeitpunkt von einem Temperaturverlauf auf den Anderen umgeschaltet werden. Idealerweise findet eine Umschaltung nur statt, wenn die Temperaturen im Wesentlichen gleich hoch sind.

Die vom Temperatursensor 20 gemessene Temperatur T_{Kreislauf} im Arbeitsraum 4 kann nur dann zur Regelung der Bremsleistung herangezogen werden, wenn dieser die tatsächliche Temperatur des Kühlwassers misst bzw. messen kann. Dies ist nur dann der Fall, wenn der Retarderbremsbetrieb bereits eine Zeitlang aktiv ist.

Die Temperatur T_{angenommen} ist eine Temperatur, die Anstelle der gemessene Temperatur T_{Kreislauf} verwendet wird, wenn diese einen Grenzwert überschreitet. Das kann beispielsweise eintreten, wenn der Retarder im Nicht-Bremsbetrieb sehr heiß geworden ist.

Die Temperatur T_{Rückregelung} ist eine Temperatur die angenommen wird, um von einem Temperaturverlauf auf den anderen umzuschalten. Beim Umschalten wird die Temperatur T_{Rückregelung} durch linearer Interpolation im Zeitverlauf so geändert, dass ein sanfter Übergang der Temperaturen erfolgt, so dass die Regeltemperatur sich nicht sprunghaft ändert.

Die Ausschalttemperatur T_{ausschalt} ist eine Temperatur, die als Regeltemperatur herangezogen wird, wenn die Regelung nach einem Bremsvorgang die Temperatur T_{Rückregelung} verwendet und diese noch nicht wieder der Temperatur T_{angenom-men} entspricht.

Figur 2 zeigt ein Bremsverlaufsdiagramm mit den dazugehörigen Temperaturverläufen beim Überblenden der gemessenen Temperatur am Sensor 20. Wie dargestellt ist die Temperatur, die von dem Sensor 20 im Arbeitsraum 4 gemessen wird, im Nicht-Bremsbetrieb bis auf 120 °C angestiegen, eine Temperatur die eigentlich ein Einschalten des Retarders verhindern würde. Da dies aber nur die Arbeitsraumtemperatur des leeren Arbeitsraums 4 ist, sagt diese Temperatur nichts über die Wärmeaufnahmefähigkeit des Kühlsystems 19 aus. Um den Retarder einschalten zu können wird für eine bestimmte Zeit, z.B. die Zeitspanne t _{Totzeit}, eine Temperatur angenommen, welche ein Einschalten des Retarders erlaubt, hier die Temperatur T_{angenommen}.

Durch die Einschaltung des Retarders wird Kühlwasser in den Arbeitsraum 4 eingeleitet, wodurch die Temperatur im Arbeitsraum 4 schnell sinkt. Um nach dem Ablauf der Totzeit Sprünge im Bremsmoment, die aufgrund eines sprunghaften Anstiegs der Temperatur beim Umschalten von T_{angenommen} auf T_{Kreislauf} auftreten würden, zu verhindern, wird für eine erste Zeitspanne t _{totzeit} als Regeltemperatur für den Bremsbetrieb die Temperatur T_{angenommen} verwendet. Anschließend wird die Temperatur T_{angenommen} in einer sich an die Zeitspanne t _{totzeit} anschließenden Zeitspanne _{tüberblendenEinschalten} von der Temperatur T_{angenommen} auf die Temperatur T_{Rückregelung} überführt und mittels linearer Interpolation bis auf die gemessene Temperatur T_{Kreislauf} überblendet, bzw. erhöht.

Nach der Überblendung haben die Temperaturen T_{angenommen} 25 und T_{Kreislauf} 24 den gleichen Temperaturverlauf, diese Temperatur entspricht dann der Regeltemperatur.

Beim Schalten in den Nicht-Bremsbetrieb wird wieder auf die Temperatur T_{ange-nommen} zurückgeschaltet und diese innerhalb einer Zeitspanne t _{überblendenAusschalten} zurüch auf die Temperatur T_{angenommen} zurückgeführt, bzw überblendet. Bei einer erneuten Bremsung wird dann wieder die Temperatur T_{angenommen} als Regeltemperatur in der Regelung 18 verwendet.

In Figur 3 ist ein weiteres Bremsverlaufsdiagramm dargestellt, welches die Temperaturverläufe bei einer Wiederholbremsung darstellt. Bei einer Wiederholbremsung muss die Retarderregelung etwas anders erfolgen, da T_{Kreislauf} und die Kühlwassertemperatur im Kühlwasserkreislauf von der letzten Bremsung noch erhöht sein kann. Würde man in diesem Fall auch von T_{angenommen} ausgehen, könnte es zu einer Überhitzung des Kühlsystems kommen.

So wird bei einer Wiederholbremsung, die beim Ausschalten des Retarders aktuell als Regeltemperatur verwendete Temperatur T_{angenommen} zum Einschaltzeitpunkt nicht weiter reduziert, sondern vorerst konstant gehalten. Die Regeltemperatur ist nun die konstante Temperatur T_{ausschalten},. Beim erneuten Bremsbetrieb wird die Tempertur T_{auschalt} so langen als Regeltemperatur verwendet bis die Temperatur T_{Kreislauf} mit der konstanten Temperatur T_{ausschalten} übereinstimmt.

Dadurch wird verhindert, dass es zu großen Bremskaftschwankungen und zu einer Überhitzung des Systems kommt.

Liegt T_{ausschalten} nach dem Abschalten unterhalb der Temperatur von T_{angenommen}, kann sicherheitshalber bei einer erneuten Bremsanforderung von T_{angenommen} ausgegangen werden.

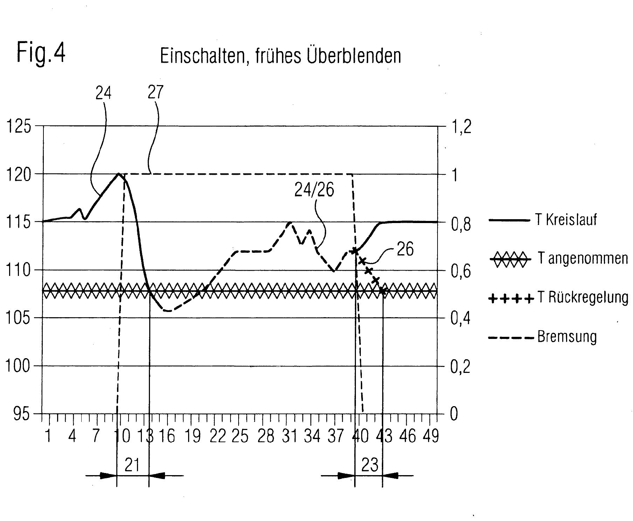

Fig. 4 zeigt eine weitere Regelungsmöglichkeit des Retarders auf Basis des Temperaturfühlers 20 im Arbeitsraum 4. Das dargestellte Bremsverlaufsdiagramm zeigt die Temperaturverläufe beim Einschalten mit frühem Überblenden der gemessenen Temperatur.

Diese Regelstrategie kann angewendet werden, wenn die gemessene Temperatur T_{Kreislauf} kurz nach dem Einschalten des Retarders auf oder unter die Temperatur T_{angenommen} fällt, so dass keine Überblendung der Regeltemperatur verwendet erfolgen muss, wobei das in den gezeigten Beispiel nur für die Regelung nach dem Einschaltvorgang gilt und beim Ausschaltvorgang die oben beschriebenen Rückregelung erfolgt.

### Bezugszeichenliste

- 1: Retarder
- 2: Stator
- 3: Rotor
- 4: Arbeitsraum
- 5: Arbeitsmediumeinlass
- 6: Saugleitung
- 7: Absaugpumpe
- 8: Druckleitung
- 9: Kanal
- 10: Ventil
- 11: Arbeitsmediumauslass
- 12: Regelventile
- 13: Druckregelventil
- 14: Einlassventil
- 15: Kühlkreislaufleitungen
- 16: Welle
- 17: Lagerschmierkanal
- 18: Regelung
- 19: Kühler
- 20: Temperatursensor
- 21: t _{totzeit}
- 22: t _{überblendenEinschalte}
- 23: t _{überblendenAusschalten}
- 24: T_{Kreislauf}
- 25: T_{angenommen}
- 26: T_{Rückregelung}
- 27: Bremsung
- 28: T_{auschalten}

## Patentansprüche

1. Verfahren zur Regelung einer Bremsvorrichtung mit einem hydrodynamischen Retarder (1), umfassend mindestens je ein Rotor- (3) und Statorschaufelrad (2), die in einem gemeinsamen Gehäuse angeordnet sind und miteinander einen torusförmigen Arbeitsraum (4) bilden, der für den Bremsbetrieb des Retarders (1) mit einem Arbeitsmedium befüllbar und für den Nicht-Bremsbetrieb des Retarders wieder entleerbar ist, und mit einer vom Arbeitsraum (4) zu einem Kühler (19) und von dort wieder zurück führenden äußeren Kühlkreislaufleitung (15),
**dadurch gekennzeichnet,**
**dass** zumindest im Bremsbetrieb zeitweise eine Temperatur (T_{Kreislauf}) zur Regelung des Bremsmomentes verwendet wird, die von einem Temperatursensor (20) stammt, der derart positioniert ist, dass mit dessen Hilfe die Temperatur im Arbeitsraum (4) gemessen wird, wobei zur Regelung des Bremsmomentes des Retarders (1) beim Einschalten des Bremsbetriebes für eine Zeitspanne (t _{totzeit}) ein Ausgangstemperaturwert als Regeltemperatur verwendet wird, die von der vom Temperatursensor (20) gemessene Temperatur (T_{Kreislauf}) abweicht.

2. Verfahren nach Anspruch 1,
**dadurch gekennzeichnet,**
**dass** die verwendeten Regeltemperatur zur Regelung des Bremsmomentes des Retarders (1) während der Zeitspanne (t _{totzeit}) eine Temperatur (T_{Rückre-gelung}) ist, wobei diese gleich einem konstanten Ausgangstemperaturwert (T_{angenommen}) sein kann, der niedrige ist als die Temperatur (T_{Kreislauf}).

3. Verfahren nach Anspruch 2,
**dadurch gekennzeichnet,**
**dass** nach Ablauf der Zeitspanne (t _{totzeit}) die Temperatur (T_{Rückregelung}) mittels linearer Interpolation in einer Zeitspanne (_{tüberblendenEinschalten}) zurück auf die gemessene Temperatur (T_{Kreislauf}) übergeblendet wird.

4. Verfahren nach Anspruch 3,
dadurch gekennzeichent,
dass die verwendeten Regeltemperatur zur Bremsmomentregelung des Retarders (1), nach dem Überblenden von der Temperatur (T_{angenommen}) auf die gemessene Temperatur (T_{Kreislauf}), auf Grundlage der gemessenen Temperatur (T_{Kreislauf}) erfolgt.

5. Verfahren einem der Ansprüche 1 bis 4,
**dadurch gekennzeichnet,**
**dass** nach dem Abschalten des Retarders (1) die für die Bremsmomentregelung verwendete Regeltemperatur von der gemessenen Temperatur (T_{Kreis-lauf}) erneut auf die angenommene Temperatur (T_{Rückregelung}) umgeschaltet wird, die dann innerhalb einer Zeitspanne (t _{überblendenAusschalten}) von der gemessenen Temperatur (T_{Kreislauf}) zurück auf die Temperatur (T_{angenommen}) übergeblendet wird.

6. Verfahren nach Anspruch 5,
**dadurch gekennzeichnet,**
**dass** bei einer erneuten Bremsung innerhalb der Zeitspanne (t _{überblendenAus-schalten}), zu Beginn der erneuten Bremsung, die zu dem Startzeitpunkt der erneuten Bremsung aktuelle angenommene Temperatur (T_{Rückregelung}) so lange zu Regelung des Bremsmomentes herangezogen wird, bis die angenommene Temperatur (T_{Rückregelung}) gleich mit gemessenen Temperatur (T_{Kreislauf}) ist.

7. Verfahren nach Anspruch 1,
**dadurch gekennzeichnet,**
**dass** Temperatur T_{Rückregelung} auf die gemessene Temperatur (T_{Kreislauf}) umgeschaltet wird, sobald die Temperatur (T_{Kreislauf}) gleich oder niedriger als die Temperatur (T_{Rückregelung}) ist.

8. Verfahren nach einem der Ansprüche 2 bis 7,
**dadurch gekennzeichnet,**
**dass** Anstelle der Temperatur (T_{angenommen}) die aktuelle Kühlwassertemperatur im Kühlkreislauf als Ausgangstemperaturwert verwendet wird.

9. Verfahren nach Anspruch 8,
**dadurch gekennzeichnet,**
**dass** der Retarder abgeschaltet wird sobald die aktuelle Kühlwassertemperatur im Kühlkreislauf einen Grenzwert übersteigt.

## Claims

1. Method for controlling a brake device having a hydrodynamic retarder (1), comprising at least in each case one rotor bladed wheel (3) and stator bladed wheel (2) which are arranged in a common housing and which together form a toroidal working chamber (4) which can be filled with a working medium for braking operation of the retarder (1) and can be emptied again for non-braking operation of the retarder, and having an external cooling circuit line (15) which leads from the working chamber (4) to a cooler (19) and back again from there,
**characterized**
**in that**, at least during braking operation, a temperature (T_{Kreisiauf}) is used for the control of the braking torque, said temperature originating from a temperature sensor (20) which is positioned such that the temperature in the working chamber (4) is measured by means of said temperature sensor, wherein an initial temperature value, which deviates from the temperature (T_{Kreisiauf}) measured by the temperature sensor (20), is used as control temperature for the control of the braking torque of the retarder (1) for a time period (t_{totzeit}) upon the activation of braking operation.

2. Method according to Claim 1,
**characterized**
**in that**, during the time period (t_{totzeit}) , the control temperature used for the control of the braking torque of the retarder (1) is a temperature (T_{Rückregelung}) , wherein this may be equal to a constant initial temperature value (T_{angenommen}) which is lower than the temperature (T_{Kreisiauf}) .

3. Method according to Claim 2,
**characterized**
**in that**, after expiry of the time period (t_{totzeit}) , the temperature (T_{Rückregelung}) is faded back to the measured temperature (T_{Kreisiauf}) by linear interpolation in a time period (t_{überblendenEinschalten}).

4. Method according to Claim 3,
**characterized**
**in that** the control temperature used for the control of the braking torque of the retarder (1), after the fading of the temperature (T_{angenommen}) to the measured temperature (T_{Kreislauf}), is based on the measured temperature (T_{Kreislauf}).

5. Method according to any of Claims 1 to 4,
**characterized**
**in that**, after the deactivation of the retarder (1), the control temperature used for the control of the braking torque is switched from the measured temperature (T_{Kreisiauf}) back to the assumed temperature (T_{Rückregelung}), which is then faded back from the measured temperature (T_{Kreisiauf}) to the temperature (T_{angenommen}) within a time period (t_{überblendenAusschalten}).

6. Method according to Claim 5,
**characterized**
**in that**, in the event of a renewed braking operation within the time period (t_{überblendenAusschalten}), at the beginning of the renewed braking operation, the temperature (T_{Rückregelung}) presently assumed at the starting point of the renewed braking operation is used for control of the braking torque until the assumed temperature (T_{Rückregelung}) is equal to the measured temperature (T_{Kreislauf}).

7. Method according to Claim 1,
**characterized**
**in that** temperature (T_{Rückregelung}) is switched to the measured temperature (T_{Kreislauf}) as soon as the temperature (T_{Kreislauf}) is equal to or lower than the temperature (T_{Rückregelung}).

8. Method according to any of Claims 2 to 7,
**characterized**
**in that**, instead of the temperature (T_{angenommen}), the present cooling water temperature in the cooling circuit is used as initial temperature value.

9. Method according to Claim 8,
**characterized**
**in that** the retarder is deactivated as soon as the present cooling water temperature in the cooling circuit overshoots a threshold value.

## Revendications

1. Procédé de régulation d'un dispositif de freinage pourvu d'un ralentisseur hydrodynamique (1), comprenant au moins une roue de rotor (3) et une roue de stator (2) qui sont disposées dans un boîtier commun et qui forment conjointement un espace de travail toroïdal (4) qui peut être rempli d'un milieu de travail destiné au fonctionnement avec freinage du ralentisseur (1) et qui peut être à nouveau vidé en vue du fonctionnement sans freinage du ralentisseur, et une conduite de circuit de refroidissement extérieure (15) allant de l'espace de travail (4) à un refroidisseur (19) et inversement,
**caractérisé en ce que**
au moins lors du fonctionnement avec freinage, une température (T_{Circuit}) est utilisée pour réguler le couple de freinage, laquelle température provient d'un capteur de température (20) qui est positionné de façon à permettre la mesure de température dans l'espace de travail (4), une valeur de température de départ étant utilisée pendant un intervalle de temps comme température de régulation (t_{temps mort}), qui est différente de la température (T_{Circuit}) mesurée par le capteur de température (20), pour réguler le couple de freinage du ralentisseur (1) lorsque le fonctionnement avec freinage est activé.

2. Procédé selon la revendication 1, **caractérisé en ce que** la température de régulation utilisée pour réguler le couple de freinage du ralentisseur (1) pendant l'intervalle de temps (t_{temps mort}) est une température (t_{rétro-régulation}), celle-ci pouvant être égale à une valeur de température de départ constante (T_{admise}) qui est inférieure à la température (T_{circuit}).

3. Procédé selon la revendication 2, **caractérisé en ce que**, après expiration de l'intervalle de temps (t_{temps mort}), une transition de la température (T_{rétro-régulation}) à la température mesurée (T_{Circuit}) est effectuée dans un intervalle de temps (t_{activation de transition}) au moyen d'une interpolation linéaire.

4. Procédé selon la revendication 3, **caractérisé en ce que** la température de régulation utilisée pour réguler le couple de freinage du ralentisseur (1) est basée sur la température mesurée (T_{Circuit}) après la transition de la température (T_{admise}) à la température mesurée (T_{circuit}).

5. Procédé selon l'une des revendications 1 à 4, **caractérisé en ce que**, après la désactivation du ralentisseur (1), la température de régulation utilisée pour la régulation du couple de freinage est à nouveau commutée de la température mesurée (T_{Circuit}) à la température admise (T_{rétro-régulation}) dont la transition de la température mesurée (T_{circuit}) à la température (T_{admise}) est effectuée ensuite dans un intervalle de temps (t_{désactivaton de transition}).

6. Procédé selon la revendication 5, **caractérisé en ce que**, lors d'un nouveau freinage, la température actuelle (T_{rétro-régulation}) admise au moment du démarrage du nouveau freinage est utilisée au début du nouveau freinage, dans l'intervalle de temps (t_{désactivation de transition}), pour réguler le couple de freinage aussi longtemps que la température admise (T_{rétro-régulation}) est égale à la température mesurée (T_{circuit}).

7. Procédé selon la revendication 1, **caractérisé en ce que** la température (T_{rétro-régulation}) est commutée à la température mesurée (T_{Circuit}) dès que la température (T_{Circuit}) est inférieure ou égale à la température (T_{rétro-régulation}).

8. Procédé selon l'une des revendications 2 à 7, **caractérisé en ce que** la température actuelle de l'eau de refroidissement est utilisée dans le circuit de refroidissement comme valeur de température de départ à la place de la température (T_{admise}).

9. Procédé selon la revendication 8, **caractérisé en ce que** le ralentisseur est désactivé dès que la température actuelle de l'eau de refroidissement dans le circuit de refroidissement dépasse une valeur limite.
